# EUROPÄISCHE PATENTSCHRIFT

(11) **EP 1 869 745 B1**
(45) Veröffentlichungstag und Bekanntmachung des Hinweises auf die Patenterteilung: **24.07.2013**
(21) Anmeldenummer: 06742251.9
(22) Anmeldetag: 11.04.2006
(51) Int. Cl.: H02G 15/115, H02G 15/184, H02G 15/103, H01R 4/70, H01R 13/52, H01R 13/627

(54) **ZWEI- ODER MEHRTEILIG AUFGEBAUTES ISOLIERKÖRPERSYSTEM ZUR HERSTELLUNG VON MITTELSPANNUNGSKABELGARNITUREN**
TWO- OR MULTIPLE-PIECE INSULATING BODY SYSTEM FOR PRODUCING MEDIUM HIGH VOLTAGE CABLE FITTINGS
SYSTEME D'ELEMENTS ISOLANTS EN DEUX PARTIES OU PLUS POUR REALISER DES ACCESSOIRES POUR CABLES DE MOYENNE TENSION

(30) Priorität: 12.04.2005 DE 102005017472
(43) Veröffentlichungstag der Anmeldung: 26.12.2007
(73) Patentinhaber: CELLPACK GMBH, D-79761 Waldshut-Tiengen (DE)
(72) Erfinder: HOFMANN, Jens, 79790 Küssaberg (DE); JACOB, Gerald, 01187 Dresden (DE); PILLING, Jürgen, 02794 Spitzkunnersdorf (DE)
(74) Vertreter: Grüneberg, Marcus
(86) Internationale Anmeldenummer: PCT/DE2006/000675
(87) Internationale Veröffentlichungsnummer: WO 2006/108412

(56) Entgegenhaltungen:
- DE-C1- 4 403 571
- US-A- 3 761 602
- PATENT ABSTRACTS OF JAPAN Bd. 1996, Nr. 11, 29. November 1996 (1996-11-29) & JP 08 191519 A (SHOWA ELECTRIC WIRE & CABLE CO LTD), 23. Juli 1996 (1996-07-23) in der Anmeldung erwähnt

## Beschreibung

Die Erfindung betrifft ein zwei- oder mehrteilig aufgebautes Isolierkörpersystem zur Herstellung von Mittelspannungskabelgarnituren mit selbsthaltendem, elektrisch isolierendem Verschluss, beispielsweise zur Aufnahme von Kabelverbindungen, gemäß dem Oberbegriff des Patentanspruchs 1.

Derartige Isolierkörpersysteme werden vor allem dort benötigt, wo Kabel- und Leitungsverbindungen, insbesondere bei Betriebsspannungen über 1000 V, nach der Installation der Kabelverbindung isoliert werden müssen oder die Notwendigkeit besteht, eine Revisionsöffnung für Wartungszwecke vorzuhalten.

Die Anforderungen an betriebssichere Isolierkörpersysteme beschränken sich dabei nicht nur auf einen mechanisch einfachen Verschluss der zu koppelnden Teile des Isolierkörpersystems, sondern vielmehr auch auf die permanente Verhinderung des Feuchteeintritts, des Gaseinschlusses sowie des elektrischen Durchschlags.

Aus der DE 4416 682 C1 ist ein Kabel-Schutzrohr und ein Verfahren zu dessen Herstellung vorbekannt. Das Kabel-Schutzrohr ist hierbei aus zwei gelenkig miteinander gekoppelten Schutzrohr-Halbschalen unter Einfügung eines streifenförmigen, verformbaren Verbindungselements zusammengesetzt. Beide Schutzrohr-Halbschalen weisen an ihrem gelenkseitigen Rand jeweils einen Hohlraum zur Aufnahme eines seitlichen Querschnittsabschnitts des Verbindungselements auf. Der Querschnittsabschnitt des Verbindungselements ist durch einen inneren, der Innenkontur des Schutzrohres folgenden Steg und einen äußeren, im Wesentlichen der Außenkontur des Schutzrohres folgenden Steg begrenzt. Das Verbindungselement weist in seinem Querschnitt einen mittleren Abschnitt, der den Zwischenraum zwischen beiden Halbschalen überbrückt, sowie seitlich daran angesetzte, vorzugsweise wulstförmige Randabschnitte auf, wobei die Randabschnitte von den Hohlräumen der Schutzrohr-Halbschalen aufgenommen werden.

Aus der WO 99/22431 ist ein Wellrohr zur schützenden Ummantelung elektrischer Leitungen vorbekannt. Das Wellrohr weist eine längs einer Mantellinie verlaufende schlitzförmige Öffnung auf, deren den Schlitz ausbildende Ränder Verschließvorrichtungen aufweisen, die den Schlitz lösbar verschließen, wobei das Wellrohr aus einem elastischen Material hergestellt ist. Sobald Druck auf das Wellrohr ausgeübt wird, fügen sich die Verschließvorrichtungen übereinander und verhaken sich miteinander zu einem Verschluss. Sofern kein Druck mehr auf das Wellrohr ausgeübt wird, verharrt der Verschluss auf Grund der durch den Druck zuvor in das Wellrohr eingebrachten Spannung in der Verschlussstellung.

In der DE 198 56 605 A1 ist ein Schutzrohrsystem für elektrische Leitungen, Kabel oder einen Kabelbaum zur Anwendung im Kraftfahrzeugbau beschrieben. Das Schutzrohrsystem umfasst ein flexibles, biegbares Schutzrohr, welches einen Hohlraum zur Aufnahme der elektrische Leitungen, Kabel oder einen Kabelbaum aufweist. Ferner ist im Schutzrohr ein durchgehender Längsschlitz vorhanden, deren Längsränder aneinander anliegend oder sich überlappend festlegbar sind. Auf der Innenseite und auf der Außenseite des Schutzrohrs ist eine Beschichtung aus einem leitfähigen Material platziert oder das Schutzrohr besteht vollständig aus einem elektrisch leitfähigen Material. Ferner ist eine Masse-Kontaktierungseinrichtung vorhanden, die zum einen mit Masse und zum anderen mit dem elektrisch leitfähigen Beschichtungs- oder Schutzrohrmaterial verbunden ist.

In der WO 99/30399 ist eine gegen elektrisches Durchschlagen ausgebildete Umhüllung für mehrere Kabel offenbart. Die nachträglich um die Kabel aufgebrachte Umhüllung weist einen Längsschlitz auf, wobei zum Verschließen der Umhüllung die beiden distalen Enden der Umhüllung nut- und federartig ineinander einrasten. Auf der zu den Kabeln weisenden Innenseite der Umhüllung sind mehrere Stege platziert, die mehrere voneinander elektrisch isolierte Kammern ausbilden. Zumindest einer dieser Stege ist gekrümmt ausgebildet und folgt im Wesentlichen der Kontur eines Kabels.

Aus der DE 695 08 087 T2 ist eine Verbindungsmuffe mit Einrastelement und Aufnahmeelement für Mittelspannungskabel offenbart. Hierbei wird zur Abdichtung und elektrischen Isolierung der Verbindung ein ölgestrecktes, polymeres Abdichtmaterial eingesetzt. Zusätzlich ist ein elektrisch leitfähiges Element nach Art eines Faradayschen Käfigs um die Verbindung herum angeordnet, welches mit der Verbindung elektrisch leitend gekoppelt ist, und die Verbindung gegenüber dem Abdichtmaterial unter Ausbildung eines Zwischenraums beabstandet.

In der JP-08191519 A ist eine als quergeteilte Muffe ausgebildete Kabelisolierung beschrieben, die zur elektrischen Isolierung für zu verbindende Kabelenden verwendet wird. Die Muffe umfasst ein zylinderförmiges zentrales Mittelstück sowie zwei konusförmige Endstücke, die im montierten Zustand jeweils stirnseitig das Mittelstück begrenzen. Im Inneren des Mittelstücks ist ein koaxial zur Längsachse des Mittelstücks sich erstreckendes elektrisch leitfähiges Element platziert, an dessen axialen Enden die beiden zu verbindenden Kabelenden montiert werden.

Vorgenannte Isolierungen haben gemeinsam, dass sie besonders einfach zu montieren sind und einen hinreichenden Schutz gegen das Eindringen von Feuchtigkeit bieten. Besonders nachteilig an diesen Isolierungen ist jedoch die Tatsache, dass bei höheren Spannungen oberhalb einer Betriebsspannung von 1000 V ein elektrisches Durchschlagen des stromführenden Kabels auf benachbarte Kabel nicht wirkungsvoll verhindert werden kann. Ein weiterer wesentlicher Nachteil besteht darin, dass unter Verwendung der eingesetzten einfachen mechanischen Verschlüsse das Einschließen von Gasen im Verschlussbereich als Voraussetzung für Hohlraumentladungen, nicht wirkungsvoll verhindert werden kann.

Die Aufgabe der Erfindung besteht nunmehr darin, ein zwei- oder mehrteilig aufgebautes Isolierkörpersystem vorzuschlagen, welches einfach zu montieren ist, bei dem die die Grenzfläche bildenden Isolierstoffe dauerhaft mit einem bestimmten Mindestdruck zur Erzielung der Hohlraumfreiheit von Gasen aufeinander liegen und das - auch für die Anwendung im Mittelspannungsbereich - ein elektrisches Durchschlagen im Verschlussbereich zuverlässig verhindert.

Ein weiteres Isolierkönpersystem ist aus der DE 4403 571 C1 bekannt.

Nach der Konzeption der Erfindung ist vorgesehen, dass das Isolierkörpersystem zur Herstellung von Mittelspannungskabelgarnituren mit selbsthaltendem, elektrisch isolierendem Verschluss, beispielsweise zur Aufnahme von Kabelverbindungen, zwei- oder mehrteilig aufgebaut ist und dabei zumindest einen ersten Isolierkörper mit einem an einer stirnseitigen Koppelfläche ausgebildeten linienförmigen, in sich geschlossenen, wulstartigen Einrastelement, welches schnappverschlussartig in ein komplementäres Aufnahmeelement an der stirnseitigen Koppelfläche eines zweiten Isolierkörpers eingreift, umfasst. Zumindest ein Isolierkörper weist die erforderlichen Öffnungen für das Einführen der Kabelenden auf. Die die elektrische Isolierung einer Mittelspannungskabelgarnitur bildenden Isolierkörper weisen jeweils eine zur Kabelverbindung weisende Innenseite und eine zur Umgebung weisende Außenseite auf. Zumindest ein Isolierkörper umhüllt die aktiven spannungsführenden Verbindungselemente. Das den Verschluss bildende linienförmige, wulstartige Einrastelement sowie das komplementäre Aufnahmeelement der beiden jeweils zu verbindenden Isolierkörper sind im Querschnitt als konvex-konkave Krümmungspaarung mit einem Kopfbereich des Einrastelements und einem Öffnungsbereich des Aufnahmeelements und jeweils einem durch die Krümmungswendepunkte abgrenzbaren Halsbereich sowie jeweils einem an den Halsbereich angrenzendem Schulterbereich ausgebildet. Hierbei ist die Verbindungspaarung Einrastelement mit Aufnahmeelement im Kopf- bzw. Öffnungsbereich als Übermaßpassung so ausgebildet, dass sich im zumindest unteren Halsbereich und im angrenzenden Schulterbereich eine dauerhafte Stoßfuge zwischen den beiden Isolierkörpern ausbildet. Des Weiteren weisen sowohl die Innenseite als auch die Außenseite der beiden Isolierkörper elektrisch leitfähige Schichten auf, die sich zumindest bei einem der beiden Isolierkörper über die stirnseitige Koppelfläche bis in den Kopf- bzw. Öffnungsbereich erstrecken und hier voneinander beabstandet sind. Im zusammengefügten Zustand der beiden Isolierkörper kontaktieren die auf den Außenseiten, beziehungsweise die auf den Innenseiten platzierten elektrisch leitfähigen Schichten einander zumindest über die stirnseitige Koppelfläche oder sie sind auf andere Weise galvanisch verbunden.
Die elektrische leitende Verbindung der äußeren bzw. der inneren leitfähigen Schichten kann auch innen durch Kontakt beider Hälften mit der Kabelverbindung und außen in bekannter Weise durch Kontaktierung beider Hälften mit einem leitfähigen Band erfolgen.

Aus praktischen Erwägungen ist das zwei- oder mehrteilige Isolierkörpersystem so ausgebildet, dass sowohl die Innenseite als auch die Außenseite des Isolierkörpers mit wulstartigem Einrastelement sich über die stirnseitige Koppelfläche bis in den Kopfbereich mindestens bis zu den Krümmungswendepunkten erstreckende elektrisch leitfähige und hier voneinander beabstandete Schichten aufweist. Der zum Isolierkörper mit wulstartigem Einrastelement komplementäre Isolierkörper mit Aufnahmeelement weist hingegen nur auf seiner Innenseite eine elektrisch leitfähige Schicht auf, die im zusammengefügten Zustand über die stirnseitige Koppelfläche kontaktiert wird.

Der Weg des Erfindungsgedanken wird auch dann nicht verlassen, wenn sowohl die Innenseite als auch die Außenseite der beiden Isolierkörper sich über die stirnseitige Koppelfläche bis in den Kopf- bzw. Öffnungsbereich mindestens bis zu den Krümmungswendepunkten erstreckende elektrisch leitfähige und hier voneinander beabstandete Schichten aufweisen. Im zusammengefügten Zustand der beiden Isolierkörper kontaktieren einerseits die auf den Außenseiten der Isolierkörper platzierten elektrisch leitfähigen Schichten und andererseits die auf den Innenseiten der Isolierkörper platzierten elektrisch leitfähigen Schichten einander.

Als Kabelverbindungen sind im Sinne der Erfindung Kabelschuhe, Schraubklemmen, Anschlussbolzen und dgl. zu verstehen.
Der Isolierkörper mit Aufnahmeelement und/oder der Isolierkörper mit Einrastelement sind zur Erzielung des erforderlichen elektrischen Isoliervermögens in der Grenzfläche zwischen Kopf- und Öffnungsbereich vorzugsweise aus einem elastischen Isoliermaterial, beispielsweise aus Silikonelastomer, gefertigt.

Ein wesentlicher Vorteil bei der Verwendung von elastischem Isoliermaterial besteht auch darin, dass nach dem Fügen bzw. Koppeln beider Isolierkörper keine Gaseinschlüsse in der Grenzfläche zwischen dem Aufnahmeelement und dem Einrastelement zurückbleiben, welche bei Betriebsspannungen sowie unter Prüfbedingungen die Zündung von Hohlraumentladungen (elektrische Teilentladungen) mit einem unzulässigen Pegel verursachen.

Die auf den Innenseiten der Isolierkörper platzierten elektrisch leitfähigen Schichten weisen ein erstes elektrisches Potential auf und die auf den Außenseiten der Isolierkörper platzierten elektrisch leitfähigen Schichten weisen ein davon verschiedenes zweites elektrisches Potential auf, wobei eines der beiden Potentiale vorzugsweise das Erdpotential ist.

Während die Schichtdicke jeder dieser leitfähigen Schichten zumindest 10 µm beträgt, weist der spezifische elektrische Volumenwiderstand jeder dieser Schichten einen Wert von höchstens 5000 Ωcm auf.

Die elektrisch leitfähigen Schichten können dabei bevorzugt als ein elektrisch leitfähiges Polymer oder als metallische Beschichtung ausgebildet sein. Erfindungsgemäß erstrecken sich die elektrisch leitfähigen Schichten gleichermaßen ausgehend von der Innenseite und Außenseite der Isolierkörper ununterbrochen über den Schulterbereich, den sich daran anschließenden Halsbereich mindestens bis zu den Krümmungswendepunkten

In einer bevorzugten Ausgestaltung der Erfindung sind die sich bis in den Bereich der Krümmungswendepunkte erstreckenden Endbereiche der leitfähigen Schichten des Isolierkörpers mit Aufnahmeelement als leitfähige Elemente mit abgerundeten Kanten ausgebildet und in das Isoliermaterial des Aufnahmeelements eingebettet. Diese mit abgerundeten Kanten ausgebildeten leitfähigen Elemente überlappen dabei die Enden der leitfähigen Schichten des Isolierkörpers mit Einrastelement um mindestens 1mm.

Eine besonders vorteilhafte Ausgestaltung der Erfindung besteht darin, dass die Endbereiche der elektrisch leitfähigen Schichten des Isolierkörpers mit Aufnahmeelement zumindest am Schulterbereich beginnend als refraktiv wirkende Feldsteuerschicht mit einer Dielektrizitätskonstante zwischen 10 und 20 ausgebildet sind. Dabei überlappen diese Endbereiche der elektrisch leitfähigen Schichten des Isolierkörpers mit Aufnahmeelement die Enden der elektrisch leitfähigen Schichten des Isolierkörpers mit Einrastelement ebenfalls um mindestens 1mm.

Zur Sicherstellung eines problemlosen Fügens bzw. Koppelns der beiden Isolierkörpers miteinander ist in der Grenzfläche zwischen dem Einrastelement und dem Aufnahmeelement ein elektrisch isolierendes und pastöses Gleitmittel platziert. Unter Verwendung dieses Gleitmittels kann auch ein wiederholtes Ausrichten der beiden Isolierkörper besonders einfach realisiert werden.

In einer weiteren bevorzugten Ausgestaltung der Erfindung ist eine zusätzliche Schicht mit einem gegenüber dem Isolierstoff des Isolierkörpers höherem Elastizitätsmodul vorgesehen, die im zusammengefügten Zustand der beiden Isolierkörper in Verbindung mit der Übermaßpassung eine zusätzliche Verspannung beider Isolierkörper in der Grenzschicht zwischen dem Aufnahmeelement und dem Einrastelement im Kopfbereich bzw. Öffnungsbereich sicherstellt. Diese Schicht kann dabei in Höhe des Aufnahmeelements entweder auf der Außenseite und Innenseite des Isolierkörpers mit Aufnahmeelement platziert oder in den Isolierkörper mit Aufnahmeelement eingebracht sein.

Die jeweiligen Übergänge vom Halsbereich zum Kopfbereich und vom Halsbereich zum Schulterbereich der leitfähigen Schichten weisen bevorzugt einen Krümmungsradius von mindestens 0,5 mm auf.

In einer besonders vorteilhaften Ausgestaltung der Erfindung ist einer der beiden Isolierkörper als Deckel zum Verschließen einer Öffnung im jeweils anderen, die Kabelverbindung umhüllenden Isolierkörper ausgebildet. Der als Deckel ausgebildete Isolierkörper weist beispielsweise dazu über seiner Umfangslinie ein sich linienförmig erstreckendes Einrastelement auf, das in das komplementäre und gegenüberliegende Aufnahmeelement des zweiten Isolierkörpers eingreift.

Ferner weist das Isolierkörpersystem zumindest eine weitere Öffnung auf, die beispielsweise das Einführen eines Außenkonus-Geräteanschlussteils oder das Befestigen von mehreren Schrauben eines Schraubkabelschuhs ermöglicht. Diese Öffnung ist dann vorzugsweise mit einem weiteren Deckel verschließbar.

Auch beide Isolierkörper können erfindungsgemäß als sich einander zu einem Gehäuse ergänzende Hüllkörper für spannungsführende Teile, beispielsweise für Verbinder von Kabelenden, ausgebildet sein. Unter Verwendung des an den stirnseitigen Koppelflächen der beiden Isolierkörper platzierten Aufnahmeelements sowie des komplementären Einrastelements werden die beiden Isolierkörper miteinander gekoppelt.

Einteilig ausgebildete Isolierkörpersysteme müssen zur Montage auf einer Seite in eine Parkposition auf dem zu verbindenden Leiter des Kabels geschoben werden. Bei Dreileiterkabeln muss dazu die Isolierung des Kabels soweit abgesetzt werden, dass eine Parkposition für die Gesamtlänge des Isolierkörpersystems zuzüglich der halben Länge des Kabelverbinders zur Verfügung steht. Viele Hersteller von Kabelgarnituren fordern dies auch für Einleiterkabel, wenn das Isolierkörpersystem nicht über dem Kabelmantel geparkt werden kann.
Demgegenüber erfordert ein als quergeteilte Verbindungsmuffe ausgebildetes, erfindungsgemäßes Isolierkörpersystem für beide zu verbindenden Kabelenden jeweils nur eine zusätzliche Parkposition für die beiden Teile des Isolierkörpersystems, die in der Summe nur so groß wie die Länge des Kabelverbinders ist. Bei einem Dreileiterkabel ist eine solche Strecke ohnehin zum Ausbiegen erforderlich.. Die zum Aufschieben der beiden Isolierkörper aufzubringende Kraft ist gegenüber einer nur einteilig ausgebildeten Verbindungsmuffe wesentlich geringer und die für das Verschieben erforderliche Strecke ist deutlich kürzer. Dies verbessert die Montagefreundlichkeit und die Montagesicherheit nicht unerheblich. Außerdem verringert sich die Gesamtlänge der Muffe um das Maß für die eingesparte Parkposition. Sofern der als Schraubverbinder ausgebildete Kabelverbinder einen größeren Durchmesser als die Isolierschicht des Kabels aufweist, ist es außerdem nicht erforderlich, dass der empfindliche Bereich für die Isolierung des Interfaces an der Absetzkante der äußeren elektrisch leitfähigen Schichten des Isolierkörper über den Kabelverbinder geschoben und damit überdehnt werden muss. Im Bereich des als Verbindungsmuffe ausgebildeten Isolierkörpersystems wird ein entsprechender Abstand zwischen dem Kabelverbinder und der Innenoberfläche der inneren elektrisch leitfähigen Schichten vorgesehen. Damit wird ausgeschlossen, dass das Isolierkörpersystem durch Grate beschädigt wird, die nach dem Abreißen der Schraubenköpfe von Abreißschrauben über die Oberfläche des Kabelverbinders hinausragen können.

Die als Hüllkörper ausgebildeten Isolierkörper können erfindungsgemäß aus mindestens zwei längs- oder quergeteilten Halbschalen bestehen. An den im gefügten Zustand aneinander liegenden Stirnseiten dieser Halbschalen sind entweder jeweils paarweise und linienförmig das Einrastelement und das Aufnahmeelement platziert oder die Stirnseiten sind als solche ausgebildet. Für den Fall der längsgeteilten Halbschalen sind die inneren leitfähigen Schichten vom distalen Ende der Isolierkörper zur Vermeidung eines von der Spannungshöhe der stromführenden Leiter abhängigen elektrischen Durchschlagens ausreichend beabstandet. Das elektrische Durchschlagen bezieht sich hierbei auf Werte der Höchstfeldstärke im ungestörten sowie im gestörten Dauerbetrieb und bei einer Prüfung der Kabelverbindung.

In einer besonders bevorzugten Ausgestaltung der Erfindung kann zwischen dem ersten Isolierkörpers und dem zweiten Isolierkörper ein zur Verlängerung dienendes Zwischenstück platziert werden. Dieses Zwischenstück weist zwei sich gegenüberliegende Koppelflächen auf, wobei die erste Koppelfläche als Einrastelement und die zweite Koppelfläche als Aufnahmeelement ausgeführt ist. Im gefügten Zustand greift das Einrastelement des ersten Isolierkörpers in das Aufnahmeelement des Zwischenstücks kraft- und formschlüssig ein. Auf der gegenüberliegenden Koppelfläche des Zwischenstücks gelangt das Einrastelement des Zwischenstücks mit dem Aufnahmeelement des zweiten Isolierkörpers in Eingriff.

Dem Erfindungsgedanken steht auch nicht entgegen, wenn unter Verwendung des vorgenannten Zwischenstücks sowohl der erste Isolierkörper als auch der zweite Isolierkörper an seiner Koppelfläche identisch ausgebildet ist. In einem ersten Fall weisen dazu beide Isolierkörper jeweils ein Einrastelement und das Zwischenstück an seinen beiden Koppelflächen jeweils ein Aufnahmeelement auf. In einem zweiten Fall weisen beide Isolierkörper hingegen jeweils ein Aufnahmeelement und das Zwischenstück an seinen beiden Koppelflächen jeweils ein Einrastelement auf.

Die Koppelflächen des Zwischenstücks können demnach unterschiedlich oder axialsymmetrisch ausgebildet sein.

Die signifikanten Vorteile und Merkmale der Erfindung gegenüber dem Stand der Technik sind im Wesentlichen:
■ selbsthaltender, elektrisch isolierender Verschluss des Isolierkörpersystems,
■ hohe elektrische Festigkeit und hohes elektrisches Isoliervermögen des aus einem Elastomer bestehenden Einrastelements des ersten Isolierkörpers und des komplementären Aufnahmeelements des zweiten Isolierkörpers und
■ Kombinierbarkeit von flächenhaften Isolierungen mit leitfähigen Schichten auf beiden gegenüberliegenden Oberflächen mit unterschiedlichem elektrischem Potential.

Weitere Merkmale und Vorteile der Erfindung erschließen sich dem Fachmann des Weiteren aus der folgenden detaillierten Beschreibung bevorzugter Ausführungsformen im Hinblick auf die anliegenden Zeichnungen; in diesen zeigen:
- Fig. 1:: Detaildarstellung des ersten Isolierkörpers mit Einrastelement und des zweiten Isolierkörpers mit Aufnahmeelement,
- Fig. 2:: Detaildarstellung zweier miteinander gefügter Isolierkörper,
- Fig. 3:: Detaildarstellung des zweiten Isolierkörpers mit einer äußeren Schicht mit einem gegenüber dem Isolierstoff des Isolierkörpers höheren Elastizitätsmodul,
- Fig. 4:: Detaildarstellung der inneren und äußeren elektrisch leitfähigen Schichten beider Isolierkörper,
- Fig. 5:: Detaildarstellung einer bevorzugten Weiterbildung der Endbereiche der elektrisch leitfähigen Schichten,
- Fig. 6:: Detaildarstellung einer weiteren bevorzugten Weiterbildung der Endbereiche der elektrisch leitfähigen Schichten,
- Fig. 7:: Längsschnitt eines aus zwei quer geteilten Halbschalen bestehenden Isolierkörpersystems, mit identisch ausgebildeten elektrisch leitfähigen Schichten der beiden Isolierkörper und
- Fig. 8:: Längsschnitt eines aus zwei quer geteilten Halbschalen bestehenden Isolierkörpersystems mit unterschiedlich ausgebildeten elektrisch leitfähigen Schichten der beiden Isolierkörper.

Das erfindungsgemäße Verschlusssystem aus Einrastelement und Aufnahmeelement ist stets in sich geschlossen. Da es sich vorzugsweise um Umhüllungen von Kabelverbindungen handelt, weist jeder Isolierkörper eine Innen- und eine Außenseite auf.

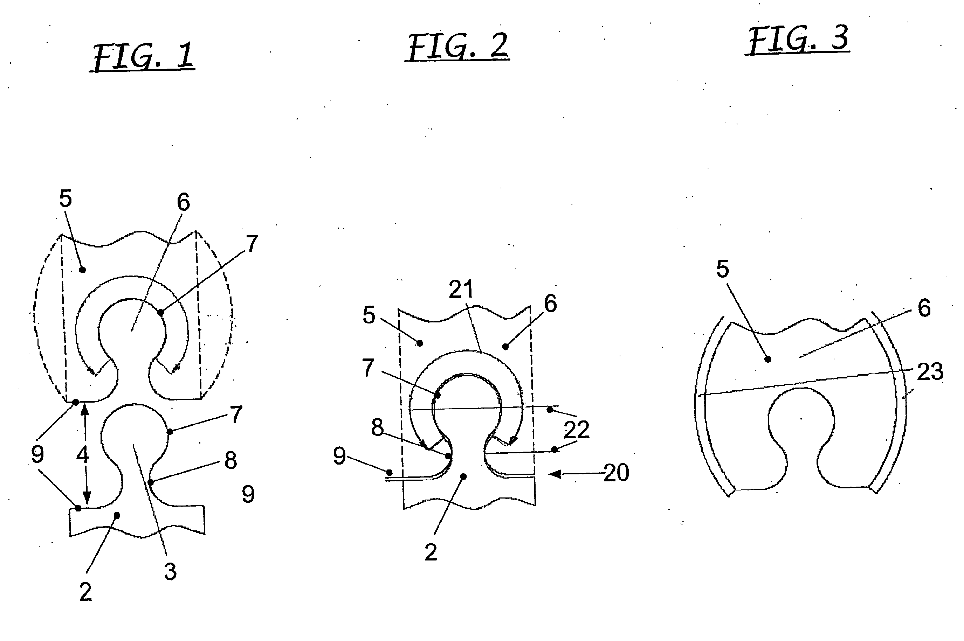

Die Fig. 1 zeigt eine Schnittdarstellung des Verschlussbereiches des ersten Isolierkörpers 2 mit Einrastelement 3 und des zweiten Isolierkörpers 5 mit dem . komplementären Aufnahmeelement 6. Der erste Isolierkörper 2 weist an seiner Stirnseite eine Koppelfläche 4 auf, an welcher ein wulstartiges Einrastelement 3 ausgeformt ist. Das Einrastelement 3 umfasst einen Kopfbereich 7, einen sich daran anschließenden Halsbereich 8 und einen Schulterbereich 9. Der zweite Isolierkörper 5 weist ebenso an seiner Stirnseite eine Koppelfläche 4 auf, an der ein Aufnahmeelement 6 ausgeformt ist, welches einen Öffnungsbereich 7, einen Halsbereich 8 und einen Schulterbereich 9 umfasst. Der Öffnungswinkel des mittels Doppelpfeilumlauf gekennzeichneten Öffnungsbereiches 7 des Aufnahmeelements 6 liegt im Bereich zwischen > 180° und < 360°, im Ausführungsbeispiel beträgt er 270°. Die beiden Isolierkörper sind als konvex-konkave Krümmungspaarung ausgebildet, wobei der Kopfbereich 7 durch die nicht näher dargestellten Krümmungswendepunkte vom Halsbereich 8 abgrenzbar ist. Die Krümmung des konvex-konkaven Bereiches kann sowohl gleichmäßig als auch ungleichmäßig sein.

Die Fig. 2 illustriert eine Detaildarstellung der Übermaßpassung 21 der beiden Isolierkörper 2, 5, die im gefügten Zustand schnappverschlussartig ineinander greifen. Der grundsätzliche Aufbau der beiden Isolierkörper 2, 5 entspricht dem der Fig. 1. Das Einrastelement 3 ist mit dem Aufnahmeelement 6 im Kopf- bzw. Öffnungsbereich 7 erfindungsgemäß als Übermaßpassung 21 ausgebildet. Das heißt, das Außenmaß des Einrastelements 3 ist stets größer als das Innenmaß des Aufnahmeelements 6. Beispielhaft ist der Bereich der Übermaßpassung 21 mit einem 270°-Doppelpfeilumlauf gekennzeichnet. Im Halsbereich 8 hingegen ist das Einrastelement 3 mit dem Aufnahmeelement 6 als Spielpassung 22 ausgebildet. Das heißt, das Außenmaß des Einrastelements 3 ist stets gleich oder kleiner als das Innenmaß des Aufnahmeelements 6 im montierten Zustand. Durch die von dem Einrastelement 3 im Kopf- und Öffnungsbereich 7 ausgehende Spannung mit Wirkung auf das Aufnahmeelement 6 entsteht im Kopfbereich ein dauerhafter Anpressdruck. Im Schulterbereich 9 ist eine dauerhafte Stoßfuge 20 vorzusehen. Das Übermaß des Einrastelements 3 im Bereich der Übermaßpassung beträgt vorzugsweise 10%.

Die Fig. 3 zeigt eine Detaildarstellung des zweiten Isolierkörpers 5 mit einer auf der Außenseite platzierten äußeren steiferen Schicht 23. Diese steifere Schicht 23 ist im Bereich des Aufnahmeelements 6 auf dem zweiten Isolierkörper 5 angeordnet und sichert im zusammengefügten Zustand beider Isolierkörper 2, 5 in Verbindung mit der in Fig. 2 beschriebenen Übermaßpassung 21 eine zusätzliche Verspannung im Verschlussbereich beider Isolierkörper 2, 5. Die aus einem härteren aber flexiblen Material ausgebildete Schicht 23 kann sich hierbei nur partiell oder aber bevorzugt vollständig mantelförmig um das Aufnahmeelement 6 erstrecken.

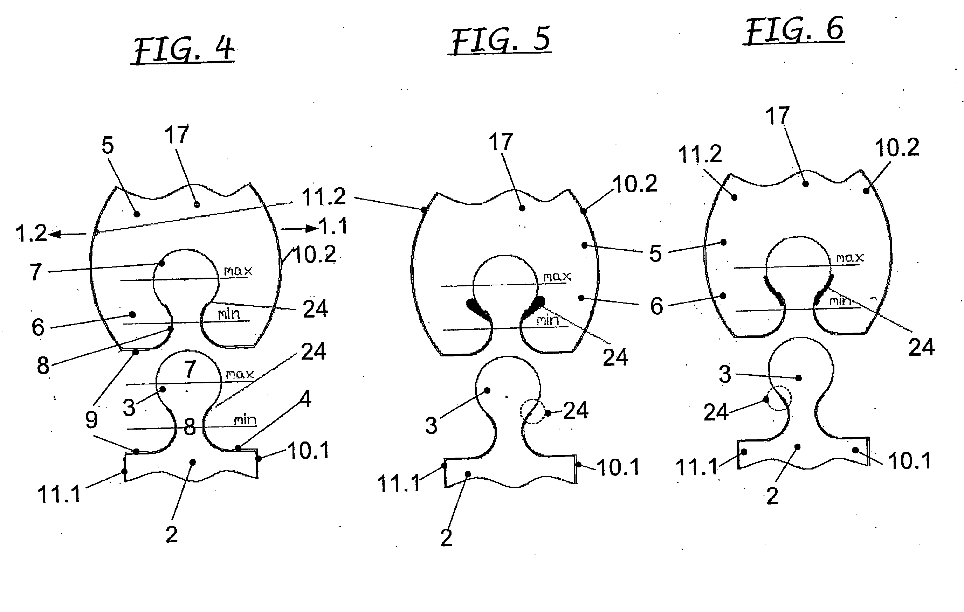

Die Fig. 4 zeigt eine Detaildarstellung der inneren und äußeren elektrisch leitfähigen Schichten 10, 11 beider Isolierkörper 2, 5. Der grundsätzliche Aufbau beider Isolierkörper 2, 5 entspricht wiederum dem der Fig. 1. Sowohl der erste Isolierkörper 2 als auch der zweite Isolierkörper 5 weisen jeweils eine innere elektrisch leitfähige Schicht 10.1, 10.2 und eine äußere elektrisch leitfähige Schicht 11.1, 11.2 auf. Diese elektrisch leitfähigen Schichten 10, 11 sind auf der Innenseite 1.1 bzw. Außenseite 1.2 beispielsweise als metallische Beschichtung auf der Isolierschicht 17 der beiden Isolierkörper 2, 5 aufgebracht. Erfindungsgemäß erstrecken sich die elektrisch leitfähigen Schichten 10, 11 gleichermaßen ausgehend von der Innenseite 1.1 und Außenseite 1.2 der Isolierkörper 2, 5 ununterbrochen über den Schulterbereich 9, den sich daran anschließenden Halsbereich 8 mindestens zu den Krümmungswendepunkten.

Im zusammengefügten Zustand kontaktieren sowohl die inneren elektrisch leitfähigen Schichten 10.1, 10.2 der beiden Isolierkörper 2, 5 als auch die äußeren elektrisch leitfähigen Schichten 11.1, 11.2 beider Isolierkörper 2, 5 einander. Naturgemäß weisen jeweils die sich kontaktierenden inneren elektrisch leitfähigen Schichten 10.1, 10.2 und die sich jeweils kontaktierenden äußeren elektrisch leitfähigen Schichten 11.1, 11.2 ein gleiches Potential auf. Erfindungsgemäß ist jedoch das innere Potential von dem äußeren Potential verschieden, wobei das äußere Potential beispielsweise das Erdpotential ist. Der jeweilige Übergang vom Halsbereich 8 zum Kopfbereich 7 und vom Halsbereich 8 zum Schulterbereich 9 der leitfähigen Schichten 10, 11 ist gekrümmt bzw. abgerundet, wobei der Krümmungsradius ca. 0,5 mm beträgt.

Die Figuren 5 und 6 zeigen besonders vorteilhafte Ausbildungen der Endbereiche 24 der elektrisch leitfähigen Schichten 10, 11 beider Isolierkörper 2, 5. In der Fig. 5 sind die sich bis in den Bereich der Krümmungswendepunkte erstreckenden Endbereiche 24 der leitfähigen Schichten 10.2, 11.2 des Isolierkörpers 5 mit Aufnahmeelement 6 als leitfähige Steuerelemente mit abgerundeten Kanten ausgebildet und in die Isolierschicht 17 des Aufnahmeelements 6 eingebettet. Die leitfähigen Schichten 10.2,11.2 des Isolierkörpers 5 mit Aufnahmeelement 6 überlappen im zusammengefügten Zustand beider Isolierkörper 2,5 dabei die Enden 24 der leitfähigen Schichten 10.1, 11.1 des Isolierkörpers 2 mit Einrastelement 3 um mindestens 1mm. Die Endbereiche 24 der leitfähigen Schichten 10.2, 11.2 des Isolierkörpers 5 mit Aufnahmeelement 6 enden in dem vom Maximalwert und Minimalwert begrenzten Bereich (eingezeichnet mit max und min). Fig. 6 illustriert hingegen einen als halbleitende Steuerschicht ausgebildeten Endbereich 24 der leitfähigen Schichten 10.2, 11.2 des Isolierkörpers 5 mit Aufnahmeelement 6. Diese halbleitende Steuerschicht ist in die Isolierschicht 17 des zweiten Isolierkörpers 5 eingebettet, so dass die Innenkontur des Aufnahmeelements 6 keinen treppenförmigen Absatz und dgl. aufweist.

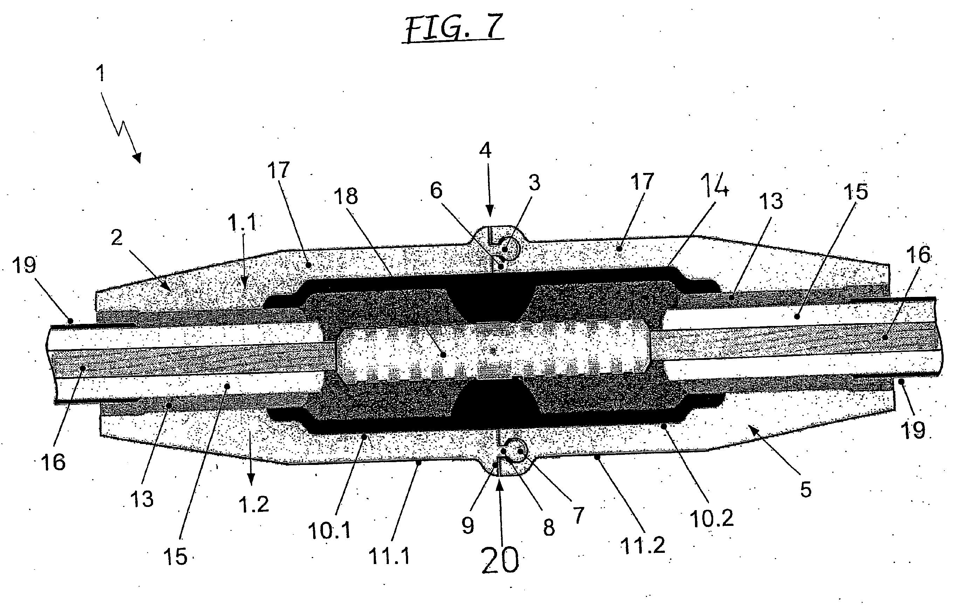

Die Fig. 7 illustriert einen Längsschnitt eines aus zwei quer geteilten Halbschalen bestehenden Isolierkörpersystems 1 in der Ausführung als quergeteilte Verbindungsmuffe in Verbindung mit zwei mittels eines Kabelverbinders 18 gekoppelten Einleiterkabeln. Die quergeteilte Verbindungsmuffe besteht aus zwei quergeteilten Halbschalen mit jeweils einer zur Umgebung weisenden Außenseite 1.2 und einer zur Kabelverbindung 18 weisenden Innenseite 1.1. Eine erste, in der Darstellung links platzierte Halbschale entspricht hierbei dem ersten Isolierkörper 2 und die zweite Halbschale entspricht dem zweiten Isolierkörper 5. Sowohl der erste Isolierkörper 2 als auch der zweite Isolierkörper 5 besteht aus einer Isolierschicht 17, welche eine zur Umgebung weisende äußere elektrisch leitfähige Schicht 11.1;11.2 und eine zur Kabelverbindung 18 weisende innere elektrisch leitfähige Schicht 10.1; 10.2 aufweist. Der erste Isolierkörper 2 umfasst eine stirnseitige Koppelfläche 4, an der ein Einrastelement 3 angeordnet ist. Dieses Einrastelement 3 erstreckt sich linienförmig über eine Umfangslinie des ersten Isolierkörpers 2. Der zweite Isolierkörper 5 weist ebenso eine stirnseitige Koppelfläche 4 auf, an der ein zum Einrastelement 3 komplementäres Aufnahmeelement 6 platziert ist. In das sich linienförmig über eine Umfangslinie des zweiten Isolierkörpers 5 erstreckende Aufnahmeelement 6 greift im zusammengefügten Zustand, wie hier dargestellt, das Einrastelement 3 des ersten Isolierkörpers 2 kraft- und formschlüssig ein. Die Koppelflächen 4 beider Isolierkörper 2, 5 sind durch einen Schulterbereich 9, einen Halsbereich 8 und einen Kopf- bzw. Öffnungsbereich 7 gekennzeichnet. Im Kopf- bzw. Öffnungsbereich 7 ist das Einrastelement 3 und das Aufnahmeelement 6 als Übermaßpassung ausgebildet. Im Halsbereich 8 und im Schulterbereich 9 befindet sich eine dauerhafte Stoßfuge 20. Die Stoßfuge 20 ist durch die sich gegenüberliegenden elektrisch leitfähigen inneren und äußeren Schichten 10, 11 elektrisch nicht beansprucht. Im zusammengefügten Zustand des Isolierkörpersystems 1 kontaktieren die äußeren elektrisch leitfähigen Schichten 11.1; 11.2 beider Isolierkörper 2, 5 ebenso einander wie die inneren elektrisch leitfähigen Schichten 10.1; 10.2 beider Isolierkörper 2, 5. Wie ersichtlich, sind die beiden inneren elektrisch leitfähigen Schichten 10.1; 10.2, welche ein von den äußeren elektrisch leitfähigen Schichten 11.1; 11.2 verschiedenes elektrisches Potential aufweisen, mit der metallisch ausgebildeten Kabelverbindung 18 partiell verbunden. Die über die Kabelverbindung 18 miteinander gekoppelten und mittels des Isolierkörpersystems 1 isolierten Kabel sind jeweils aus einem elektrischen Leiter 16, einer den elektrischen Leiter 16 umgebenden Isolierschicht 15 sowie einem auf der Isolierschicht 15 platzierten äußeren Leitschicht des Kabels 19 aufgebaut. Bis auf den Bereich, in welchem die inneren elektrisch leitfähigen Schichten 10.1; 10.2 die Kabelverbindung 18 kontaktieren, ist die Kabelverbindung 18 koaxial von einem Hohlraum 14 umgeben. Die Isolierschichten 15 beider Kabel sind an ihren distalen Enden von jeweils einem refraktiv wirkenden Feldsteuerelement 13 mantelförmig umgeben, welche jeweils mit den zugehörigen inneren elektrisch leitfähigen Schichten 10.1, 10.2 elektrisch leitend verbunden sind. Die inneren elektrisch leitfähigen Schichten 10.1, 10.2 ihrerseits kontaktieren im Bereich der Kabelverbindung 18 einander und erstrecken sich ausgehend von den refraktiv wirkenden Feldsteuerelementen 13 in Richtung der Koppelflächen 4 beider Isolierkörper 2, 5 über den Schulterbereich 9, den sich daran anschließenden Halsbereich 8 bis zum Kopfbereich 7. Im Bereich des Kabelverbinders 18 sind die inneren elektrisch leitfähigen Schichten 10.1,10.2 beider Isolierkörper 2, 5 ausreichend vom Kabelverbinder 18 beabstandet, um während des Aufschiebens bzw. Fügens beider Isolierkörper 2, 5 eine Beschädigung durch eventuell herausragende Grate der freigelegten Leiter 16 der Kabel auszuschließen. Die äußeren elektrisch leitfähigen Schichten 11.1; 11.2 erstrecken sich ausgehend von der Außenseite 1.2, den Schulterbereich 9, den Halsbereich 8 bis zum Kopf- bzw. Öffnungsbereich 7.
Zur Vermeidung eines von der Spannungshöhe der stromführenden Leiter 16 abhängigen elektrischen Durchschlagens sind die inneren leitfähigen Schichten 10.1, 10.2 beider Isolierkörper 2, 5 vom distalen Ende der Isolierkörper 2, 5 ausreichend voneinander beabstandet.

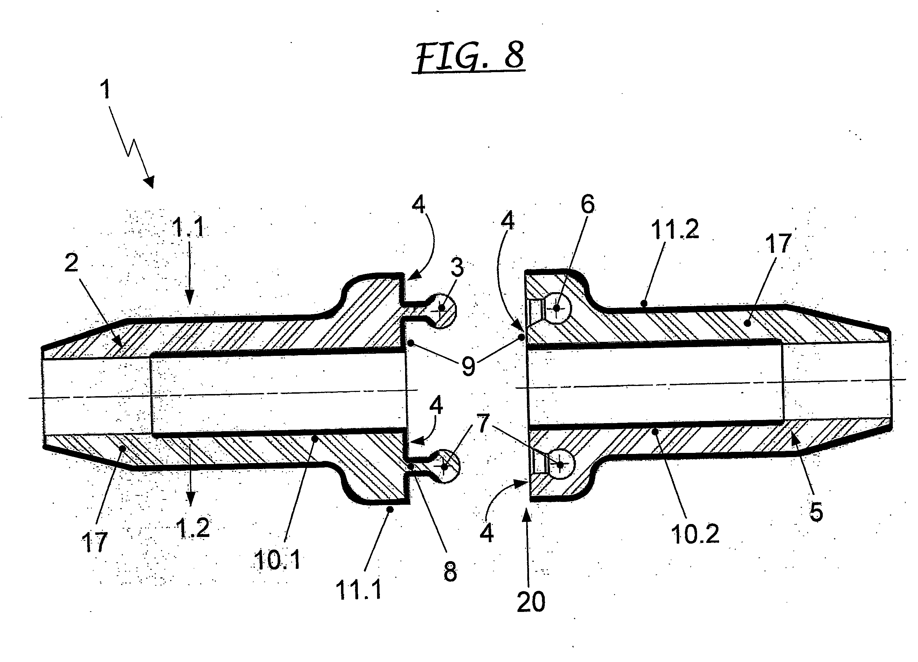

Die Fig. 8 illustriert ebenso einen Längsschnitt eines aus zwei quer geteilten Halbschalen bestehenden Isolierkörpersystems 1 als quergeteilte Verbindungsmuffe in Anlehnung an Fig. 7, jedoch in einer bevorzugten Ausgestaltung. Unter Verzicht auf die Illustration des Kabelverbinders 18 sowie des zugehörigen Kabels 19 liegt der Schwerpunkt dieser Ausgestaltung der Erfindung nach Fig. 8 in der Darstellung der unterschiedlich ausgebildeten elektrisch leitfähigen Schichten 10.1, 10.2 und 11.1, 11.2 der beiden Isolierkörper 2, 5. Der wesentliche Unterschied gegenüber dem Isolierkörpersystems 1 gemäß Fig. 7 besteht nunmehr darin, dass nur die Innenseite 1.1 und die Außenseite 1.2 des Isolierkörpers 2 mit wulstartigem Einrastelement 3 sich über die stirnseitige Koppelfläche 4 bis in den Kopfbereich 7 mindestens bis zu den Krümmungswendepunkten erstreckende elektrisch leitfähige und hier voneinander beabstandete Schichten 10.1, 11.1 aufweist. Der zum Isolierkörper 2 mit wulstartigem Einrastelement 3 komplementäre Isolierkörper 5 mit Aufnahmeelement 6 weist zwar auf seiner Innenseite 1.1 und auf seiner Außenseite 1.2 die elektrisch leitfähigen Schichten 10.2 und 11.2 auf, diese Schichten setzen sich aber nicht über die stirnseitige Koppelfläche 4 fort. Damit kontaktieren im zusammengefügten Zustand der beiden Halbschalen nur die auf den Innenseiten 1.1 beider Isolierkörper 2, 5 platzierten elektrisch leitfähigen Schichten 10.1, 10.2 an der gemeinsamen Koppelfläche 4 einander.

**LISTE DER BEZUGSZEICHEN**

| | |
|---|---|
| 1 | Isolierkörpersystem |
| 1.1 | Innenseite |
| 1.2 | Außenseite |
| 2 | erstes Isolierkörper |
| 3 | Einrastelement |
| 4 | Koppelfläche |
| 5 | zweiter Isolierkörper |
| 6 | Aufnahmeelement |
| 7 | Kopfbereich, Öffnungsbereich |
| 8 | Halsbereich |
| 9 | Schulterbereich |
| 10 | innere elektrisch leitfähige Schicht |
| 10.1 | innere elektrisch leitfähige Schicht des ersten Isolierkörpers |
| 10.2 | innere elektrisch leitfähige Schicht des zweiten Isolierkörpers |
| 11 | äußere elektrisch leitfähige Schicht |
| 11.1 | äußere elektrisch leitfähige Schicht des ersten Isolierkörpers |
| 11.2 | äußere elektrisch leitfähige Schicht des zweiten Isolierkörpers |
| 13 | Feldsteuerschicht, Feldsteuerelement |
| 14 | Hohlraum |
| 15 | Isolierschicht des Kabels |
| 16 | Leiter des Kabels |
| 17 | Isolierschichten |
| 18 | Kabelverbindung |
| 19 | Äußere Leitschicht des Kabels |
| 20 | Stoßfuge |
| 21 | Bereich Übermaßpassung |
| 22 | Bereich Spielpassung |
| 23 | biegesteifes Element |
| 24 | Endbereiche der elektrisch leitfähigen Schichten |

## Patentansprüche

1. Zwei- oder mehrteiliges Isolierkörpersystem (1) zur Herstellung von Mittelspannungskabelgarnituren mit selbsthaltendem, elektrisch isolierendem Verschluss, beispielsweise zur Aufnahme von Kabelverbindungen, zumindest umfassend einen ersten Isolierkörper (2) mit einem an einer stirnseitigen Koppelfläche (4) ausgebildeten linienförmigen, wulstartigen Einrastelement (3), welches schnappverschlussartig in ein komplementäres Aufnahmeelement (6) an der stirnseitigen Koppelfläche (4) eines zweiten Isolierkörpers (5) eingreift, wobei zumindest ein Isolierkörper (2 oder 5) die erforderlichen Öffnungen für das Einführen der Kabelenden aufweist, und die die elektrische Isolierung einer Mittelspannungskabelgarnitur bildenden Isolierkörper (2, 5) jeweils eine zur Kabelverbindung weisende Innenseite (1.1) und eine zur Umgebung weisende Außenseite (1.2) umfassen, und wobei zumindest ein Isolierkörper (2 oder 5) die aktiven spannungsführenden Verbindungselemente umhüllt und das den Verschluss bildende linienförmige, wulstartige, in sich geschlossene Einrastelement (3) sowie das komplementäre Aufnahmeelement (6) der beiden jeweils zu verbindenden Isolierkörper (2, 5) im Querschnitt als konvex-konkave Krümmungspaarung mit einem Kopfbereich (7) des Einrastelements (3) und einem Öffnungsbereich (7) des Aufnahmeelements (6) und jeweils einem durch die Krümmungswendepunkte abgrenzbaren Halsbereich (8) und jeweils einem an den Halsbereich (8) angrenzendem Schulterbereich (9) ausgebildet sind, wobei das Einrastelement (3) mit dem Aufnahmeelement (6) im Kopf- bzw. Öffnungsbereich (7) derart als Übermaßpassung ausgebildet sind, dass sich im zumindest unteren Halsbereich (8) und im angrenzendem Schulterbereich (9) eine dauerhafte Stoßfuge (20) zwischen den beiden Isolierkörpern (2, 5) ausbildet, und dass beide Isolierkörper (2, 5) auf der Innenseite (1.1) und auf der Außenseite (1.2) elektrisch leitfähige Schichten (10, 11) aufweisen und dass sich diese bei zumindest einem der beiden Isolierkörper (2, 5) über die stirnseitige Koppelfläche (4) bis in den Kopf- bzw. Öffnungsbereich (7) mindestens bis zu den Krümmungswendepunkten erstrecken und hier voneinander beabstandet sind, wobei im zusammengefügten Zustand der beiden Isolierkörper (2, 5) die auf den Außenseiten (1.2) beziehungsweise die auf den Innenseiten (1.1) platzierten elektrisch leitfähigen Schichten (11.1, 11.2) und (10.1,10.2) einander zumindest über die stirnseitige Koppelfläche (4) kontaktieren oder auf andere Weise galvanisch verbunden sind.

2. Zwei- oder mehrteiliges Isolierkörpersystem (1) nach Anspruch 1, **dadurch gekennzeichnet, dass** sowohl die Innenseite (1.1) als auch die Außenseite (1.2) der beiden Isolierkörper (2, 5) sich über die stirnseitige Koppelfläche (4) bis in den Kopf- bzw. Öffnungsbereich (7) mindestens bis zu den Krümmungswendepunkten erstreckende elektrisch leitfähige und hier voneinander beabstandete Schichten (10, 11) aufweisen, wobei im zusammengefügten Zustand der beiden Isolierkörper (2, 5) einerseits die auf den Außenseiten (1.2) der Isolierkörper (2, 5) platzierten elektrisch leitfähigen Schichten (11.1, 11.2) und andererseits die auf den Innenseiten (1.1) der Isolierkörper (2, 5) platzierten elektrisch leitfähigen Schichten (10.1,10.2) einander kontaktieren.

3. Zwei- oder mehrteiliges Isolierkörpersystem (1) nach Anspruch 1, **dadurch gekennzeichnet, dass** sowohl die Innenseite (1.1) als auch die Außenseite (1.2) des Isolierkörpers (2) sich über die stirnseitige Koppelfläche (4) bis in den Kopfbereich (7) mindestens bis zu den Krümmungswendepunkten erstreckende elektrisch leitfähige und hier voneinander beabstandete Schichten (10.1, 11.1) aufweisen und der Isolierkörper (5) auf seiner Innenseite (1.1) eine elektrisch leitfähige Schicht (10.2) aufweist, die im zusammengefügten Zustand über die stirnseitige Koppelfläche (4) kontaktiert wird.

4. Zwei- oder mehrteiliges Isolierkörpersystem (1) nach einem der Ansprüche 1 bis 3, **dadurch gekennzeichnet, dass** der Isolierkörper (5) mit Aufnahmeelement (6) und/oder der Isolierkörper (2) mit Einrastelement (3) zur Erzielung des erforderlichen elektrischen Isoliervermögens in der Grenzfläche zwischen Kopf- und Öffnungsbereich (7) aus einem elastischen Isoliermaterial gefertigt sind.

5. Zwei- oder mehrteiliges Isolierkörpersystem (1) nach Anspruch 4, **dadurch gekennzeichnet, dass** als Isoliermaterial ein Silikonelastomer vorgesehen ist.

6. Zwei- oder mehrteiliges Isolierkörpersystem (1) nach einem der Ansprüche 1 bis 5, **dadurch gekennzeichnet, dass** die auf den Innenseiten (1.1) der Isolierkörper (2, 5) platzierten elektrisch leitfähigen Schichten (10.1, 10.2) ein erstes elektrisches Potential aufweisen und die auf den Außenseiten (1.2) der Isolierkörper (2,5) platzierten elektrisch leitfähigen Schichten (10.2, 11.2) ein davon verschiedenes zweites elektrisches Potential aufweisen.

7. Zwei- oder mehrteiliges Isolierkörpersystem (1) nach Anspruch 6, **dadurch gekennzeichnet, dass** eines der beiden elektrischen Potentiale das Erdpotential ist.

8. Zwei- oder mehrteiliges Isolierkörpersystem (1) nach einem der Ansprüche 1 bis 7, **dadurch gekennzeichnet, dass** die leitfähigen Schichten (10, 11) mindestens eine Schichtdicke von 10 µm und höchstens einen spezifischen elektrischen Volumenwiderstand von 5000 Ωcm aufweisen.

9. Zwei- oder mehrteiliges Isolierkörpersystem (1) nach einem der Ansprüche 1 bis 8, **dadurch gekennzeichnet, dass** die elektrisch leitfähigen Schichten (10, 11) als metallische Beschichtung oder als ein elektrisch leitfähiges Polymer ausgebildet sind.

10. Zwei- oder mehrteiliges Isolierkörpersystem (1) nach einem der Ansprüche 1 bis 9, **dadurch gekennzeichnet, dass** die elektrisch leitfähigen Schichten (10, 11) sich gleichermaßen ausgehend von der Innenseite (1.1) und Außenseite (1.2) der Isolierkörper (2, 5) ununterbrochen über den Schulterbereich (9) und den sich daran anschließenden Halsbereich (8) mindestens bis zu den Krümmungswendepunkten erstrecken.

11. Zwei- oder mehrteiliges Isolierkörpersystem (1) nach einem der Ansprüche 1 bis 10, **dadurch gekennzeichnet, dass** die Endbereiche (24) der leitfähigen Schichten (10.2, 11.2) des Isolierkörpers (5) mit Aufnahmeelement (6) als leitfähige Elemente mit abgerundeten Kanten ausgebildet und in das Isoliermaterial (17) des Aufnahmeelements (6) eingebettet sind, und dabei die Enden der leitfähigen Schichten (10.1, 11.1) des Isolierkörpers (2) mit Einrastelement (3) um mindestens 1 mm überlappen.

12. Zwei- oder mehrteiliges Isolierkörpersystem (1) nach einem der Ansprüche 1 bis 11, **dadurch gekennzeichnet, dass** in der Grenzfläche zwischen dem Einrastelement (3) und dem Aufnahmeelement (6) ein elektrisch isolierendes und pastöses Gleitmittel platziert ist.

13. Zwei- oder mehrteiliges Isolierkörpersystem (1) nach einem der Ansprüche 1 bis 11, **dadurch gekennzeichnet, dass** auf der Außenseite (1.2) und Innenseite (1.1) des Isolierkörpers (5) mit Aufnahmeelement (6) jeweils eine in Höhe des Aufnahmeelements (6) platzierte Schicht mit einem gegenüber dem Isolierstoff des Isolierkörpers höherem Elastizitätsmodul (23) aufgebracht ist, die im zusammengefügten Zustand der beiden Isolierkörper (2, 5) in Verbindung mit der Übermaßpassung eine zusätzliche Verspannung beider Isolierkörper (2, 5) in der Grenzschicht zwischen Aufnahmeelement (6) und Einrastelement (3) im Kopf- bzw. Öffnungsbereich (7) sicherstellt.

14. Zwei- oder mehrteiliges Isolierkörpersystem (1) nach einem der Ansprüche 1 bis 13, **dadurch gekennzeichnet, dass** in den Isolierkörper (5) mit Aufnahmeelement (6) in Höhe des Aufnahmeelements (6) eine Schicht mit einem gegenüber dem Isolierstoff des Isolierkörpers höherem Elastizitätsmodul (23) eingebracht ist, die im zusammengefügten Zustand der beiden Isolierkörper (2, 5) in Verbindung mit der Übermaßpassung eine zusätzliche Verspannung beider Isolierkörper (2, 5) in der Grenzschicht zwischen Aufnahmeelement (6) und Einrastelement (3) im Kopf- bzw. Öffnungsbereich (7) sicherstellt.

15. Zwei- oder mehrteiliges Isolierkörpersystem (1) nach einem der Ansprüche 1 bis 14, **dadurch gekennzeichnet, dass** der jeweilige Übergang vom Halsbereich (8) zum Kopfbereich (7) und vom Halsbereich (8) zum Schulterbereich (9) einen Krümmungsradius von mindestens 0,5 mm aufweisen.

16. Zwei- oder mehrteiliges Isolierkörpersystem (1) nach einem der Ansprüche 1 bis 15, **dadurch gekennzeichnet, dass** beide Isolierkörper (2, 5) als sich einander zu einem Gehäuse ergänzende Hüllkörper für spannungsführende Teile, beispielsweise für Verbinder (18) von Kabelenden, ausgebildet sind und unter Verwendung des an den stirnseitigen Koppelflächen (4) der beiden Isolierkörper (2, 5) platzierten Aufnahmeelements (6) sowie des komplementären Einrastelements (3) miteinander koppelbar sind.

17. Zwei- oder mehrteiliges Isolierkörpersystem (1) nach einem der Ansprüche 1 bis 16, **dadurch gekennzeichnet, dass** das mehrteilige Isolierkörpersystem (1) aus zwei längs- oder quergeteilten Halbschalen besteht, an deren im gefügten Zustand aneinander liegenden Stirnseiten
a. jeweils paarweise und linienförmig das Einrastelement (3) und das Aufnahmeelement (6) platziert sind, oder
b. die Stirnseiten als solche ausgebildet sind, wobei
im Falle der längsgeteilten Halbschalen die inneren leitfähigen Schichten (10.1, 10.2) vom distalen Ende der Isolierkörper (2, 5) zur Vermeidung eines von der Spannungshöhe der stromführenden Leiter (16) abhängigen elektrischen Durchschlagens ausreichend beabstandet sind.

18. Zwei- oder mehrteiliges Isolierkörpersystem (1) nach einem der Ansprüche 1 bis 16, **dadurch gekennzeichnet, dass** einer der beiden Isolierkörper (2, 5) als Deckel zum Verschließen einer Öffnung im jeweils anderen, die Kabelverbindung umhüllenden Isolierkörper (5, 2) ausgebildet ist.

19. Zwei- oder mehrteiliges Isolierkörpersystem (1) nach einem der Ansprüche 1 bis 18, **dadurch gekennzeichnet, dass** das Isolierkörpersystem (1) zumindest eine weitere Öffnung aufweist, die beispielsweise das Einführen eines Außenkonus-Geräteanschlussteils oder das Befestigen von mehreren Schrauben eines Schaubkabelschuhs ermöglicht und mit einem Deckel verschließbar ist.

20. Zwei- oder mehrteiliges Isolierkörpersystem (1) nach einem der Ansprüche 1 bis 19, **dadurch gekennzeichnet, dass** ein zur Verlängerung dienendes Zwischenstück mit zwei Koppelflächen (4) vorgesehen ist, welches zwischen dem ersten Isolierkörper (2) und dem zweiten Isolierkörper (5) platziert ist, und die Koppelflächen (4) des Zwischenstücks mit den jeweiligen Koppelflächen (4) des ersten Isolierkörpers (2) und denen des zweiten Isolierkörpers (5) in Eingriff gebracht werden, wobei
a. beide Koppelflächen (4) des Zwischenstücks als Aufnahmeelement (6) und die Koppelflächen (4) der beiden zu koppelnden Isolierkörper (2,5) als Einrastelement (3) oder
b. beide Koppelflächen (4) des Zwischenstücks als Einrastelement (3) und die Koppelflächen (4) der beiden zu koppelnden Isolierkörper (2, 5) als Aufnahmeelement (6) oder
c. eine erste Koppelfläche (4) des Zwischenstücks als Einrastelement (3) und eine zweite Koppelfläche (4) als Aufnahmeelement (6) und die Koppelfläche (4) des ersten Isolierkörpers (2) bzw. des zweiten Isolierkörpers (5) als Aufnahmeelement (6) und die Koppelfläche (4) des zweiten Isolierkörpers (5) bzw. des ersten Isolierkörpers (2) als Einrastelement (3)
ausgebildet sind.

## Claims

1. Two- or multiple-piece insulating body system (1) for producing medium high voltage cable fittings with a self-locking, electrically insulating closure, for example, for holding cable connections, at least comprising a first insulating body (2) with a linear, bulb-like locking element (3) established at a coupling surface (4), located on the face, which in the manner of a snap fit engages with a complementary receiving element (6) at the coupling surface (4), located on the face, of a second insulating body (5), whereby at least one insulating body (2 or 5) is provided with the openings required for inserting the cable ends and the insulating bodies (2,5) forming the electrical insulation of a medium high voltage cable fitting each include an inner side (1.1) pointing to the cable connection and an outer side (1.2) pointing to the surrounding area, and whereby at least one insulating body (2 or 5) covers the active voltage-carrying connection elements and the linear, bulb-like, closed locking element (3) as well as the complementary receiving element (6) of both insulating bodies (2,5) to be connected in cross-section are established as convex-concave curvature pairing with a head area (7) of the locking element (3) and an opening area (7) of the receiving element (6) and each with a neck area (8) delimitable by the curvature points of inflection and each with a shoulder area (9) adjoining the neck area (8), whereby the locking element (3) with the receiving element (6) in the head, or opening, respectively, area (7) are established as oversize fit such that at least in the lower neck area (8) and adjoining shoulder area (9) a permanent gap (20) between both insulating bodies (2,5) establishes, and both insulating bodies (2,5) are provided with conductive layers (10,11) on the inner side (1.1) and the outer side (1.2), said layers extending at at least one of both insulating bodies (2,5) over the coupling surface (4), located on the face, into the head, or opening, respectively, area (7) at least up to the curvature points of inflection, here being distanced to each other, whereby in joined state of both insulating bodies (2,5), the conductive layers (11.1,11.2) and (10.1,10.2) placed on the outer sides (1.2) and the inner sides (1.1), respectively, contact each other at least over the coupling surface (4), located on the face, or are direct-connected in another manner.

2. Two- or multiple-piece insulating body system (1) to claim 1 **characterized by** that both the inner side (1.1) and the outer side (1.2) of both insulating bodies (2,5) are provided with conductive layers (10,11), here being distanced, which extend over the coupling surface (4), located on the face, into the head, or opening, respectively, area (7) at least up to the curvature points of inflection, whereby in joined state of both insulating bodies (2,5), on the one hand, the conductive layers (11.1,11.2) placed on the outer sides (1.2) of the insulating bodies (2,5) and, on the other hand, the conductive layers (10.1,10.2) placed on the inner sides (1.1) of the insulating bodies (2,5) contact each other.

3. Two- or multiple-piece insulating body system (1) to claim 1 **characterized by** that both the inner side (1.1) and the outer side (1.2) of the insulating body (2) are provided with conductive layers (10.1,11.1), here being distanced, extending over the coupling surface (4), located on the face, into the head area (7) at least up to the curvature points of inflection and the insulating body (5) on its inner side (1.1) is provided with a conductive layer (10.2) which, in joined state, is contacted over the coupling surface (4), located on the face.

4. Two- or multiple-piece insulating body system (1) to one of the claims 1 to 3 **characterized by** that the insulating body (5) with receiving element (6) and/or the insulating body (2) with locking element (3) are made of an elastic insulating material in order to achieve the required electrical insulation capacity in the interface between head and opening area (7).

5. Two- or multiple-piece insulating body system (1) to claim 4 **characterized by** that a silicone elastomer is provided as insulating material.

6. Two- or multiple-piece insulating body system (1) to one of the claims 1 to 5 **characterized by** that the conductive layers (10.1,10.2) placed on the inner sides (1.1) of the insulating bodies (2,5) have a first electrical potential and the conductive layers (10.2,11.2) placed on the outer sides (1.2) of the insulating bodies (2,5) have a second electrical potential different from the first electrical potential.

7. Two- or multiple-piece insulating body system (1) to claim 6 **characterized by** that one of both potentials is the earth potential.

8. Two- or multiple-piece insulating body system (1) to one of the claims 1 to 7 **characterized by** that the conductive layers (10,11) have a layer thickness of at least 10 µm and a maximum volume resistivity of 5000 Ω cm.

9. Two- or multiple-piece insulating body system (1) to one of the claims 1 to 8 **characterized by** that the conductive layers (10,11) are established as metallic coating or electrically conductive polymer.

10. Two- or multiple-piece insulating body system (1) to one of the claims 1 to 9 **characterized by** that the conductive layers (10,11) extend equally starting from the inner side (1.1) and outer side (1.2) of the insulating bodies (2,5) continuously over the shoulder area (9) and the adjoining neck area (8) at least up to the curvature points of inflection.

11. Two- or multiple-piece insulating body system (1) to one of the claims 1 to 10 **characterized by** that the end areas (24) of the conductive layers (10.2,11.2) of the insulating body (5) with receiving element (6) are established as conductive elements with rounded edges and are embedded in the insulating material (17) of the receiving element (6), and overlap the ends of the conductive layers (10.1,11.1) of the insulating body (2) with locking element (3) by at least 1 mm.

12. Two- or multiple-piece insulating body system (1) to one of the claims 1 to 11 **characterized by** that an electrically insulating pasty slip agent is placed in the interface between the locking element (3) and the receiving element (6).

13. Two- or multiple-piece insulating body system (1) to one of the claims 1 to 11 **characterized by** that on each the outer side (1.2) and inner side (1.1) of the insulating body (5) with receiving element (6) a layer (23) with a modulus of elasticity higher than that of the insulating material of the insulating body is applied at the level of the receiving element (6), this layer (23), in joined state of both insulating bodies (2,5), in connection with the oversize fit ensuring an additional straining of both insulating bodies (2,5) in the interface between the receiving element (6) and locking element (3) in the head, or opening, respectively, area (7).

14. Two- or multiple-piece insulating body system (1) to one of the claims 1 to 13 **characterized by** that a layer (23) with a modulus of elasticity higher than that of the insulating material of the insulating body is inserted at the level of the receiving element (6) into the insulating body (5) with receiving element (6), this layer (23), in joined state of both insulating bodies (2,5), in connection with the oversize fit ensuring an additional straining of both insulating bodies (2,5) in the interface between the receiving element (6) and locking element (3) in the head, or opening, respectively, area (7).

15. Two- or multiple-piece insulating body system (1) to one of the claims 1 to 14 **characterized by** that the transitions from the neck area (8) to the head area (7) and from the neck area (8) to the shoulder area (9) each have a radius of curvature of at least 0.5 mm.

16. Two- or multiple-piece insulating body system (1) to one of the claims 1 to 15 **characterized by** that both insulating bodies (2,5) are established as covering bodies for voltage-carrying parts completing each other to form a casing, for example, for connectors (18) of cable ends, and are couplable to each other using the receiving element (6) placed at the coupling surfaces (4), located on the face, of both insulating bodies (2,5) as well as the complementary locking element (3).

17. Two- or multiple-piece insulating body system (1) to one of the claims 1 to 16 **characterized by** that the insulating body system (1) consists of two axially or radially split half-shells, at the adjoining faces of which, in joined state,
a. the locking element (3) and the receiving element (6), in pairs and linearly, are placed, or
b. the faces are established as such elements, whereby
in case of axially split half-shells the inner conductive layers (10.1,10.2) are sufficiently distanced to the distal ends of the insulating bodies (2,5) in order to avoid an electrical breakdown depending on the voltage level of the current-carrying conductors (16).

18. Two- or multiple-piece insulating body system (1) to one of the claims 1 to 16 **characterized by** that one of both insulating bodies (2,5) is established as cover for closing an opening in the other insulating body (5,2) covering the cable connection.

19. Two- or multiple-piece insulating body system (1) to one of the claims 1 to 18 **characterized by** that the insulating body system (1) is provided with at least one further opening that, for example, makes possible to insert an external taper appliance connector or to fasten several screws of a screw terminal, and can be closed with a cover.

20. Two- or multiple-piece insulating body system (1) to one of the claims 1 to 19 **characterized by** that an intermediate piece with two coupling surfaces (4) is provided which is placed between the first insulating body (2) and the second insulating body (5), and the coupling surfaces (4) of the intermediate piece are engaged with the respective coupling surfaces (4) of the first insulating body (2) and that of the second insulating body (5), whereby
a. both coupling surfaces (4) of the intermediate piece are established as receiving element (6) and the coupling surfaces (4) of both insulating bodies (2,5) to be coupled as locking element (3), or
b. both coupling surfaces (4) of the intermediate piece are established as locking element (3) and the coupling surfaces (4) of both insulating bodies (2,5) to be coupled as receiving element (6), or
c. a first coupling surface (4) of the intermediate piece is established as locking element (3) and a second coupling surface (4) of the intermediate piece is established as receiving element (6) and the coupling surface (4) of the first insulating body (2) or the second insulating body (5), respectively, as receiving element (6) and the coupling surface (4) of the second insulating body (5) or the first insulating body (2), respectively, as locking element (3).

## Revendications

1. Système d'éléments isolants (1) en deux parties ou plus pour realiser des accessoires pour câbles de moyenne tension, muni d'une fermeture électriquement isolante à verrouillage, par exemple pour la réception de jonctions de câbles, comprenant au moins un premier élément isolant (2) avec un élément encliquetable (3) linéaire formant un boudin sur une surface d'accouplement (4) frontale, lequel se met en prise par déclic dans un élément récepteur (6) complémentaire sur la surface d'accouplement (4) frontale d'un deuxième élément isolant (5), au moins un élément isolant (2 ou 5) présentant les ouvertures requises pour introduire les extrémités de câbles ainsi que les éléments isolants (2, 5) formant l'isolation électrique d'un accessoire pour câbles de moyenne tension comprenant une face interne (1.1) orientée vers la jonction des câbles ainsi qu'une face externe (1.2) orientée vers l'environnement, et au moins un élément isolant (2 ou 5) enveloppant les éléments actifs de liaison conducteurs de tension, et l'élément encliquetable (3), boudin linéaire fermé qui forme la fermeture, ainsi que l'élément récepteur (6) complémentaire des dits éléments isolants, au nombre de deux (2, 5), à relier, et formant, selon une section transversale, un appariement de courbure convexe-concave avec une zone de tête (7) de l'élément encliquetable (3), une zone d'ouverture (7) de l'élément récepteur (6), ainsi qu'une zone de col (8), laquelle peut être délimitée par les points d'inflexion de la courbure, et une zone d'épaulement (9) avoisinant la zone de col (8), l'élément encliquetable (3) étant configuré pour un ajustage serré avec l'élément récepteur (6) dans la zone de tête et d'ouverture (7) de manière à ce qu'un joint de jonction (20) permanent se forme entre les deux éléments isolants (2, 5), au moins dans la partie inférieure de la zone du col (8) et dans la zone d'épaulement (9) avoisinante, et que les deux éléments isolants (2, 5) présentent des couches électriquement conductrices (10, 11) sur la face interne (1.1) comme sur la face externe (1.2) et que ces dites couches, sur l'un des deux éléments isolants (2, 5) au moins, s'étendent à travers la surface d'accouplement (4) frontale à la zone de tête ou d'ouverture (7) au moins jusqu'aux points d'inflexion de la courbure où elles sont espacées l'une de l'autre, les couches électriquement conductrices (11.1, 11.2) et (10.1, 10.2) placées sur les faces internes (1.1) et sur les faces externes (1.2) à l'état joint des deux éléments isolants (2, 5) se contactant au moins par la surface d'accouplement (4) frontale ou bien se trouvent reliées galvaniquement d'une autre manière.

2. Système d'éléments isolants (1) en deux parties, selon la revendication 1, **caractérisé en ce que** la face interne (1.1) ainsi que la face externe (1.2) des deux éléments isolants (2, 5) présente des couches électriquement conductrices (10, 11) s'étendant à travers la surface d'accouplement (4) frontale jusqu'à la zone de tête ou d'ouverture (7) au moins jusqu'aux points d'inflexion de la courbure où elles sont espacées l'une de l'autre, les couches électriquement conductrices (11.1, 11.2) placées sur les faces externes (1.2) des éléments isolants (2, 5) d'une part et les couches électriquement conductrices (10.1, 10.2) placées sur les faces internes (1.1) des éléments isolants (2, 5) d'autre part se trouvant en contact à l'état joint des deux éléments isolants (2, 5).

3. Système d'éléments isolants (1) en deux parties selon la revendication 1, **caractérisé en ce que** la face interne (1.1) de même que la face externe (1.2) de l'élément isolant (2) présentent des couches électriquement conductrices (10.1, 11.1) s'étendant à travers la surface d'accouplement (4) frontale à la zone de tête (7) au moins jusqu'aux points d'inflexion de la courbure où elles sont espacées l'une de l'autre et que l'élément isolant (5) présente une couche électriquement conductrice (10.2) sur sa face interne (1.1), la dite couche, à l'état joint, se trouvant en contact avec la surface d'accouplement (4) frontale.

4. Système d'éléments isolants (1) en deux parties selon une des revendications 1 à 3, **caractérisé en ce que** l'élément isolant (5) à élément récepteur (6) et/ou l'élément isolant (2) à élément encliquetable (3) sont fabriqués d'un matériau isolant élastique afin d'atteindre la capacité d'isolation électrique requise à l'interface entre la la zone de tête et d'ouverture (7).

5. Système d'éléments isolants (1) en deux parties selon la revendication 4, **caractérisé en ce qu'**un élastomère à silicone est prévu en tant que matériau isolant.

6. Système d'éléments isolants (1) en deux parties selon une des revendications 1 à 5, **caractérisé en ce que** les couches électriquement conductrices (10.1, 10.2) placées sur les faces internes (1.1) des éléments isolants (2, 5) présentent un premier potentiel électrique et que les couches électriquement conductrices (11.1, 11.2) placées sur les faces externes (1.2) des éléments isolants (2, 5) présentent un deuxième potentiel électrique, différent du premier.

7. Système d'éléments isolants (1) en deux parties selon la revendication 6, **caractérisé en ce qu'**un des deux potentiels est le potentiel de terre.

8. Système d'éléments isolants (1) en deux parties selon une des revendications 1 à 7, **caractérisé en ce que** les couches conductrices (10, 11) présentent une épaisseur de 10 µm au minimum et une résistance volumique électrique spécifique de 5000 Ωcm au maximum.

9. Système d'éléments isolants (1) en deux parties selon une des revendications 1 à 8, **caractérisé en ce que** les couches électriquement conductrices (10, 11) constitués d'un revêtement métallique ou d'un polymère électriquement conducteur.

10. Système d'éléments isolants (1) en deux parties selon une des revendications 1 à 9, **caractérisé en ce que** les couches électriquement conductrices (10, 11) s'étendent sans interruption à partir de la face interne (1.1) comme de la face externe (1.2) des éléments isolants (2, 5) à travers la zone d'épaulement (9) et la zone de col (8) adjacente, et au moins jusqu'aux points d'inflexion de la courbure.

11. Système d'éléments isolants (1) en deux parties selon une des revendications 1 à 10, **caractérisé en ce que** les zones d'extrémité (24) des couches conductrices (10.2, 11.2.) de l'élément isolant (5) à élément récepteur (6) sont configurées comme éléments conducteurs à bords arrondis et encastrées dans le matériau isolant (17) de l'élément récepteur (6) en chevauchant d'au moins 1 mm les extrémités des couches conductrices (10.1., 11.1) de l'élément isolant (2) à élément encliquetable (3).

12. Système d'éléments isolants (1) en deux parties selon une des revendications 1 à 11, **caractérisé en ce qu'**un lubrifiant électriquement isolant et pâteux est placé à l'interface entre l'élément encliquetable (3) et l'élément récepteur (6).

13. Système d'éléments isolants (1) en deux parties selon une des revendications 1 à 11, **caractérisé en ce qu'**une couche d'un module d'élasticité élevé (23) par rapport au matériau isolant de l'élément isolant est appliquée sur la face externe (1.2) et la face interne (1.1) de l'élément isolant (5) à élément récepteur (6), qui, à l'état joint des deux éléments isolants (2, 5), en combinaison avec l'ajustage serré, assure un serrage additionnel des deux éléments isolants (2, 5) à l'interface entre l'élément récepteur (6) et l'élément encliquetable (3) dans la zone de tête ou d'ouverture (7).

14. Système d'éléments isolants (1) en deux parties selon une des revendications 1 à 13, **caractérisé en ce que**, dans l'élément isolant (5) à élément récepteur (6) et au niveau de l'élément récepteur (6), est intégrée une couche d'un module d'élasticité élevée (23) par rapport au matériau de l'élément isolant, laquelle, à l'état joint des deux éléments isolants (2, 5) en combinaison avec l'ajustage serré, assure un serrage additionnel des deux éléments isolants (2, 5) à l'interface entre l'élément récepteur (6) et l'élément encliquetable (3) dans la zone de tête ou d'ouverture (7).

15. Système d'éléments isolants (1) en deux parties selon une des revendications 1 à 14, **caractérisé en ce que** la transition de la zone de col (8) à la zone de tête (7) et de la zone de col (8) à la zone d'épaulement (9) présente un rayon de courbure de 0,5 mm au minimum.

16. Système d'éléments isolants (1) en deux parties selon une des revendications 1 à 15, **caractérisé en ce que** les deux éléments isolants (2, 5) sont formés en corps de gaine se complétant pour former un boîtier pour les éléments conducteurs de tension, par exemple pour les connecteurs (18) des extrémités de câbles, et peuvent être couplés au moyen de l'élément récepteur (6) et de l'élément encliquetable (3) complémentaire placés sur les surfaces d'accouplement (4) frontales des deux éléments isolants (2, 5).

17. Système d'éléments isolants (1) en deux parties selon une des revendications 1 à 16, **caractérisé en ce que** le système d'éléments isolants (1) bi- ou multipartite consiste en deux demi-coquilles divisées dans le sens de la longueur ou de la largeur, sur les surfaces frontales desquelles sont placés l'un contre l'autre à l'état joint
a. l'élément encliquetable (3) et l'élément récepteur (6) placés en paire et linéairement, ou
b. les surfaces frontales ainsi formées,
les couches conductrices internes (10.1, 10.2.) étant suffisamment espacées de l'extrémité distale des éléments isolants (2, 5) dans le cas de demi-coquilles divisées dans le sens de la longueur afin d'éviter le claquage qui pourrait se produire selon le niveau de tension des conducteurs de courant (16).

18. Système d'éléments isolants (1) en deux parties selon une des revendications 1 à 16, **caractérisé en ce que** l'un des deux éléments isolants (2, 5) est formé comme un couvercle pour fermer une ouverture de l'autre élément isolant (5, 2) enveloppant la jonction des câbles.

19. Système d'éléments isolants (1) en deux parties selon une des revendications 1 à 18, **caractérisé en ce que** le système d'éléments isolants (1) présente au moins une autre ouverture qui permet par exemple l'introduction d'une pièce de connexion à cône mâle ou la fixation de plusieurs vis d'une cosse de câble et qui peut être fermée au moyen d'un couvercle.

20. Système d'éléments isolants (1) en deux parties selon une des revendications 1 à 19, **caractérisé en ce qu'**une pièce intermédiaire à deux surfaces d'accouplement (4) servant de rallonge est prévue, laquelle est placée entre le premier élément isolant (2) et le deuxième élément isolant (5), et que les surfaces d'accouplement (4) de la pièce intermédiaire se mettent en prise avec les surfaces d'accouplement (4) correspondantes du premier élément isolant (2) d'une part et du deuxième élément isolant (5) d'autre part,
a. les deux surfaces d'accouplement (4) de la pièce intermédiaire étant configurées comme élément récepteur (6) tandis que les surfaces d'accouplement (4) des deux éléments isolants (2, 5) à coupler sont configurées comme élément encliquetable (3) ou
b. les deux surfaces d'accouplement (4) de la pièce intermédiaire étant configurées comme élément encliquetable (3) tandis que les surfaces d'accouplement (4) des deux éléments isolants (2, 5) à coupler sont configurées comme élément récepteur (6) ou
c. une première surface d'accouplement (4) de la pièce intermédiaire étant configurée comme élément encliquetable (3), une deuxième surface d'accouplement (4) étant configurée comme élément récepteur (6), la surface d'accouplement (4) du premier élément isolant (2) comme du deuxième élément isolant (5) étant configurée comme élément récepteur (6), et, respectivement, la surface d'accouplement (4) du deuxième élément isolant (5) et du premier élément isolant (2) étant configurée comme élément encliquetable (3).
